# EUROPÄISCHE PATENTSCHRIFT

(11) **EP 3 797 229 B1**
(45) Veröffentlichungstag und Bekanntmachung des Hinweises auf die Patenterteilung: **19.10.2022**
(21) Anmeldenummer: 19711524.9
(22) Anmeldetag: 07.03.2019
(51) Int. Cl.: F16D 65/00

(54) **BREMSSTAUBPARTIKELFILTER SOWIE SCHEIBENBREMSENANORDNUNG MIT EINEM BREMSSTAUBPARTIKELFILTER**
BRAKE DUST PARTICLE FILTER AND DISC BRAKE ASSEMBLY COMPRISING A BRAKE DUST PARTICLE FILTER
FILTRE À PARTICULES DE POUSSIÈRE DE FREIN AINSI QUE SYSTÈME DE FREIN À DISQUE MUNI D'UN FILTRE À PARTICULES DE POUSSIÈRE DE FREIN

(30) Priorität: 22.05.2018 DE 102018112261
(43) Veröffentlichungstag der Anmeldung: 31.03.2021
(73) Patentinhaber: MANN+HUMMEL GmbH, 71636 Ludwigsburg (DE)
(72) Erfinder: KÜMMERLING, Volker, 74321 Bietigheim-Bissingen (DE); JESSBERGER, Thomas, 71679 Asperg (DE); BOCK, Lukas, 74321 Bietigheim-Bissingen (DE); EVLEKLI, Coskun, 71332 Waiblingen (DE); THÉBAULT, Eric, 71640 Ludwigsburg (DE); CORBA, Jan, 93466 Chamerau (DE); WELLER, Benedikt, 71711 Kleinbottwar (DE); BECK, Andreas, 74366 Kirchheim (DE)
(74) Vertreter: Mann + Hummel Intellectual Property
(86) Internationale Anmeldenummer: PCT/EP2019/055790
(87) Internationale Veröffentlichungsnummer: WO 2019/223914

(56) Entgegenhaltungen:
- WO-A1-2019/048374
- DE-A1-102009 021 203
- DE-A1-102010 053 879
- DE-A1-102012 016 835
- US-A1- 2008 029 357
- US-A1- 2014 054 119

## Beschreibung

Die Erfindung betrifft einen Bremsstaubfilter für eine Scheibenbremsenanordnung mit einer Bremsscheibe und einem Bremssattel. Der Bremstaubpartikelfilter ist zum Auffangen von beim Bremsen entstehenden Partikeln ausgebildet. Die Erfindung betrifft weiterhin eine Schreibenbremsenanordnung mit einem solchen Bremsstaubpartikelfilter.

### Technisches Gebiet

Es ist bekannt, Partikel, die durch Bremsabrieb entstehen, mit einem Bremsstaubpartikelfilter aufzufangen und zu entsorgen. Derlei Partikel entstehen durch Reibung zwischen Bremsbelag und Bremsscheibe einer Scheibenbremse. Ein solcher Bremsstaubpartikelfilter ist beispielsweise aus DE 10 2012 016 835 A1 bekannt geworden. Dieser Bremsstaubpartikelfilter bedingt jedoch eine Integration in ein Bremssattelgehäuse und eignet sich daher nur bedingt als Nachrüstlösung.

Aus der DE 10 2010 053879 A1 ist ein Bremsstaubsammler für eine Scheibenbremsanordnung bekannt. Dieser weist ein Gehäuse auf, welches einen Bremssattel der Scheibenbremsanordnung zumindest teilweise umgibt, wobei das Gehäuse eine Sammelkammer für Bremsstaub aufweist, in der Lamellen angeordnet sind, die abzuscheidenden Bremsstaub in die Sammelkammer leiten und gleichzeitig verhindern, dass dieser wieder aus der Sammelkammer austritt.

### Offenbarung der Erfindung

Aufgabe der vorliegenden Erfindung ist es demgegenüber, einen Bremsstaubpartikelfilter bereitzustellen, der sowohl effizienter zur Abscheidung von beim Bremsen anfallenden Partikeln ausgebildet ist, als auch zur Nachrüstung bestehender Fahrzeuge geeignet ist. Aufgabe der vorliegenden Erfindung ist es weiterhin, eine Scheibenbremsenanordnung mit einem solchen Bremsstaubpartikelfilter bereitzustellen.

Der erfindungsgemäße Bremsstaubpartikelfilter ist für beliebige Anwendungen von Scheibenbremsen geeignet, sowohl mobile als auch stationäre Anwendungen. Bei den mobilen Anwendungen kann dieser beispielsweise in PKW, LKW, Bussen, Schienenfahrzeugen eingesetzt werden. Stationär beispielsweise bei Wellenbremsen, wie sie bei Windkraftanlagen eingesetzt werden.

Diese Aufgabe wird durch einen Bremsstaubpartikelfilter gemäß Patentanspruch 1 sowie eine Scheibenbremsenanordnung gemäß Patentanspruch 19 gelöst. Die abhängigen Ansprüche geben bevorzugte Weiterbildungen wieder.

Der Bremsstaubpartikelfilter weist ein ringsegmentförmiges, etwa bananenförmiges und/oder helmförmiges, Gehäuse auf. In dem Gehäuse wird in einem Montagezustand die Bremsscheibe einer Scheibenbremsenanordnung aufgenommen. Das Gehäuse weist zumindest zwei Gehäuseseitenwände und eine Gehäuseumfangswand auf. Die Gehäuseumfangswand verbindet im montierten Zustand des Bremsstaubpartikelfilters die beiden Gehäuseseitenwände mittelbar oder unmittelbar. Im Innenraum des Gehäuses, d.h. der Bremsscheibe zugewandt, weist der Bremsstaubpartikelfilter ein Filtermedium auf. Um die effektive Filterfläche des Filtermediums zu vergrößern, ist im Bremsstaubpartikelfilter zumindest eine Zunge vorgesehen, die durch das Filtermedium gebildet wird. Hierdurch wird eine höhere Filterwirkung als im Stand der Technik erreicht. Die Zunge erstreckt sich dabei bevorzugt von einem äußeren Umfang zu einem inneren Umfang, d.h. nach radial innen.

Die Zunge erstreckt sich erfindungsgemäß in einem Gehäuseinnenraum zumindest abschnittsweise mit zumindest einer Radialkomponente von der Gehäuseumfangswand weg. Die Zunge hat erfindungsgemäß eine flache Querschnittsform und weist eine der Gehäuseumfangswand zugewandte Grundfläche, eine in den Gehäuseinnenraum ragende Stirnfläche sowie zumindest eine Seitenfläche auf. Unter flach wird hierin eine Querschnittsform verstanden, deren breite Seite viel größer ist als deren schmale Seite. Alternativ könnte eine solche Querschnittsform auch als platt oder länglich bezeichnet werden. Die in diesem Sinne flache Querschnittsform ergibt des Weiteren aus den Abmessungen des in einem unverarbeiteten Zustand flachen Filtermediums, das eben eine vorbestimmte Dicke aufweist.

Die Zunge weist erfindungsgemäß keine von dem Filtermedium separaten stützenden Vorrichtungsbestandteile auf, insbesondere keine die Zunge stützenden Gehäusebestandteile. Das Filtermedium stellt eine ausreichende Steifigkeit bereit, um die Zunge ohne stützende Vorrichtungsbestandteile selbst struktursteif in Form zu halten.

Die Zunge kann sich von einer Gehäusewand erstrecken, vorzugsweise erstreckt sich die Zunge von der Gehäuseumfangswand. Alternativ oder zusätzlich kann sich die zumindest eine Zunge auch von einer oder beiden der Gehäuseseitenwände erstrecken, so dass diese in etwa in Axialrichtung verläuft. Ferner kann der Bremsstaubpartikelfilter ein Filterelement aufweisen, das das Filtermedium aufweist. Das Filterelement kann eine Filterelement-Stützstruktur aufweisen, auf bzw. an der das Filtermedium befestigt ist und die der Anbringung des Filtermediums im Gehäuse dienen kann. Die Filterelement-Stützstruktur kann beispielsweise aus einem Metallgitter gebildet sein. Beim Vorsehen eines Filterelements ist das Filtermedium besonders leicht und umweltfreundlich austauschbar, da bei einer Beladung des Filtermediums lediglich das Filterelement getauscht werden muss und nicht das komplette Gehäuseteil. Zur Aufnahme des Filterelements ist gemäß dieser Ausführungsform vorteilhaft ein Aufnahmebereich vorgesehen, in den das Filterelement eingesetzt werden kann. In dem Aufnahmebereich kann es beispielsweise durch Clipse oder andere geeignet erscheinende Befestigungselemente gehalten werden. Besonders vorteilhaft weist das Filterelement eine gebogene Form auf, insbesondere eine Kreisbogenform, die mit der Innenform bzw. dem Radius der Gehäuseumfangswand korrespondiert.

In einer bevorzugten Ausführungsform kann die Zunge einen im Wesentlichen rechteckförmigen Querschnitt haben, wobei ein Verhältnis einer breiten Seite zu einer schmalen Seite des rechteckförmigen Querschnitts zwischen 15 und 60, bevorzugt zwischen 20 und 40, liegt. Derartige Werte lassen sich für eine Vielzahl von Baugrößen des Bremsstaubpartikelfilters mit den hierin beschriebenen Filtermedientypen erreichen.

Besonders bevorzugt erstreckt sich die zumindest eine Zunge derart in dem Innenraum, dass deren Grundfläche in einem Montagezustand des Bremsstaubpartikelfilters parallel zu einer Drehachse der Bremsscheibe verläuft.

Gemäß einer weiteren bevorzugten Ausführungsform ist zumindest eine weitere Zunge vorgesehen, die sich in den Gehäuseinnenraum von zumindest einer Gehäuseseitenwand erstreckt. Bevorzugt bilden die sich von der Gehäuseumfangswand erstreckende Zunge und die sich von der Gehäuseseitenwand erstreckende Zunge eine zusammenhängende Zunge, die eine L-förmige oder U-förmige Grundform aufweist. Hierdurch wird die effektive Zungenoberfläche erhöht, was zu einer nochmals verbesserten Abscheideleistung beiträgt. Ferner ist dadurch eine in Radialrichtung Platz sparende Bauweise möglich, da ein Teil der gesamten Zungenoberfläche auf die an der Gehäuseseitenwand vorliegende Zunge verteilt werden kann.

Gemäß einer weiteren Ausführungsform kann das Filtermedium eine Faltung aufweisen, die die Zunge bildet, wobei eine Faltenrichtung insbesondere zumindest eine Radialkomponente aufweist. Filtermedien, auch hochtemperaturstabile Filtermedien, lassen sich problemlos maschinell in eine gefaltete Form bringen. Entsprechende Herstellverfahren hierzu sind dem Fachmann bekannt. Dass die Faltenrichtung der Zunge eine Radialkomponente aufweist bedeutet nicht, dass sich diese genau radial erstreckt, sie kann sich jedoch auch genau radial erstrecken. In einer Ausführungsform, bei der sich die Zunge von einer der Gehäuseseitenwände erstreckt, kann die Faltenrichtung (Faltental/Faltenberg) auch axial verlaufen.

Gemäß einer noch weiteren Ausführungsform kann vorgesehen sein, dass das Filtermedium, das die zumindest eine Zunge bildet, in Form eines formsteifen Formfilterelements vorliegt, das eine gebogene Außenkontur hat, die mit einer Innenkontur der Gehäuseumfangswand des Gehäuses korrespondiert. Gemäß dieser Ausführungsform kann die Zunge nicht als Faltung gebildet sein, sondern in Form eines Vollmaterials. Geeignete poröse Materialien, mit denen sich ein derartiger Körper realisieren lässt, sind beispielsweise gesinterte Metallschäume oder Metallvliese, insbesondere aus Edelstahl.

In einer bevorzugten Weiterbildung kann an einer Gehäusewand, insbesondere an der Gehäuseumfangswand, zumindest ein Teil einer Filterelementmontagevorrichtung vorliegen, insbesondere zumindest ein Teil einer Schnellmontagevorrichtung, insbesondere ein Teil einer Clipsverbindung, Schnellmontagelasche und/oder ein magnetisches Verbindungselement. Hierüber können die vorgenannten Filterelemente im Servicefall schnell und einfach getauscht werden. Derartige Filterelementmontagevorrichtungen eignen sich sowohl für die Verwendung mit Filterelementen mit Filterelement-Stützstruktur als auch für Filterelemente, die als Formfilter ausgebildet sind. Alternativ kann das Filtermedium, insbesondere, wenn es ein metallisches Filtermedium aufweist, auch mit dem Gehäuse verschweißt sein.

Darüber hinaus kann das Filterelement zumindest ein mit der Filterelementmontagevorrichtung korrespondierendes Montagegegenelement aufweisen, insbesondere einen zumindest abschnittsweise gebogenen, insbesondere nach radial innen gebogenen, axial verlaufenden Randbereich zumindest eines Umfangsendes, der dazu ausgebildet ist, mit der Schnellmontagevorrichtung in Wirkverbindung zu treten. Bei dem gebogenen Randbereich handelt es sich bevorzugt um einen endständigen Randbereich, der durch die Biegung eine erhöhte Steifigkeit aufweist und so die Befestigungskräfte übertragen kann. An einem dem gebogenen Randbereich abgewandten Ende des Filterelements kann ein alternatives Befestigungselement vorliegen, bspw. an einem separaten Gehäusedeckel, das das Filterelement in dem Innenraum verklemmt.

In weiter bevorzugter Ausgestaltung der Erfindung ist das Filtermedium im Bereich der Zunge in Form einer Sammeltasche bzw. Auffangtasche für Partikel ausgebildet, wobei die Auffangtasche nach unten hin geschlossen ist, so dass Partikel aufgrund der auf sie wirkenden Schwerkraft nicht aus der Auffangtasche fallen können. Der Bremsstaubpartikelfilter kann hierdurch große Partikelmengen zurückhalten. Dem Filtermedium kann die Form der Sammel- bzw. Auffangtasche vorteilhaft bereits bei der Herstellung aufgeprägt werden, so dass die Zunge diese Form struktursteif beibehält. Bevorzugt befindet sich ein tiefster Punkt der Tasche in Montageanordnung in Schwererichtung nach unten weisend.

Der Bremsstaubpartikelfilter kann zusätzlich zu der zuvor beschriebenen Zunge zumindest eine weitere Zunge im Gehäuseinnenraum aufweisen. Mit anderen Worten weist der Bremsstaubpartikelfilter vorzugsweise eine Mehrzahl von im Gehäuseinnenraum nach innen ragenden Zungen auf, die vorzugsweise in Umfangsrichtung beabstandet angeordnet sind. Die Zungen sind jeweils durch das Filtermedium gebildet. Durch die Anordnung bzw. Ausbildung mehrerer Zungen wird die Filterwirkung weiter signifikant erhöht. Zumindest zwei Zungen können dabei einen jeweils unterschiedlichen Winkel zur Gehäuseumfangswand einnehmen. Unter Winkel zur Gehäuseumfangswand wird hierbei ein Winkel zwischen einer in einem gedachten Kontaktpunkt der Zunge mit der Gehäuseumfangswand angelegten Tangente und der Längserstreckung der Zunge verstanden.

Der Bremsstaubpartikelfilter ist vorzugsweise so ausgebildet, dass die filternde Wirkung in Umfangsrichtung des Gehäuses zunimmt. Die Zunahme erfolgt dabei bevorzugt von einem Anlagebereich des Gehäuses weg, wobei der Anlagebereich zur Anlage am Bremssattel der Scheibenbremsenanordnung vorgesehen ist. Mit anderen Worten ist der Bremsstaubpartikelfilter vorzugsweise so ausgebildet, dass die Filterwirkung mit zunehmendem Abstand vom Bremssattel bzw. von dem Anlagebereich zur Anlage am Bremssattel, zunimmt. Unter einer besseren Filterwirkung wird hierin beispielsweise die Abscheidbarkeit feinerer Partikelfraktionen verstanden. Dies erfolgt insbesondere durch eine oder mehrere folgender Maßnahmen:
- Die Porosität des Filtermediums nimmt in Umfangsrichtung des Gehäuses ab. Insbesondere weist das Filtermedium an einer Zunge eine größere Porosität auf als das Filtermedium an der nächsten benachbarten Zunge, die sich weiter weg vom Anlagebereich des Bremsstaubpartikelfilters befindet.
- Die Dicke des Filtermediums nimmt in Umfangsrichtung des Gehäuses zu.
- Eine Zunge schließt einen kleineren Winkel mit der Gehäuseumfangswand ein als eine benachbarte Zunge, die sich weiter weg vom Anlagebereich befindet.
- Eine Zunge weist mit ihrem freien Ende weniger weit in den Innenraum des Gehäuses als eine benachbarte Zunge, die sich weiter weg vom Anlagebereich des Bremsstaubpartikelfilters befindet.
- Die Fläche einer Zunge ist kleiner als die Fläche einer benachbarten Zunge, die sich weiter vom Anlagebereich des Bremsstaubpartikelfilters entfernt befindet.

Der Bremsstaubpartikelfilter kann zumindest eine Öffnung zum Austritt gefilterter Luft in der Gehäusewand, insbesondere in der Gehäuseumfangswand, aufweisen. Vorzugsweise weist der Bremsstaubpartikelfilter eine Mehrzahl an Öffnungen zum Austritt gefilterter Luft in der Gehäusewand, insbesondere in der Gehäuseumfangswand, auf.

Zumindest eine Öffnung ist vorzugsweise in einem Gehäuseendbereich vorgesehen, der - in Umfangsrichtung des Gehäuses betrachtet - im Bereich des Bremssattels ausgebildet ist. Der Gehäuseendbereich übergreift vorzugsweise zumindest einen nach radial außen offenen Bereich des Bremssattels, da dort typischerweise ein hoher Bremsstaubaustritt erfolgt, der neben dem Bremsenabrieb, der den Bremssattel in Tangentialrichtung verlässt, die größte Emissionsquelle darstellt. Bevorzugt handelt es sich bei dem Filtermedium um einen zusammenhängenden Materialstreifen, der sich sowohl über die Mehrzahl der innenliegenden Zungen als auch über die Innenseite der Gehäuseumfangswand im Gehäuseendbereich erstreckt.

Um zu verhindern, dass Luft durch den Staudruck bei der Fahrt entgegen der Filtrationsrichtung durch das Filtermedium gepresst wird, kann an der Gehäusewand, insbesondere an der Gehäuseumfangswand, zumindest eine sich nach außen erstreckende Rippe angeordnet oder ausgebildet sein. Vorzugsweise sind eine Mehrzahl von nach außen ragenden Rippen an der Gehäusewand, insbesondere der Gehäuseumfangswand, vorgesehen. Die zumindest eine nach außen ragende Rippe kann bevorzugt im Bereich der zumindest einen Öffnung vorgesehen sein, so dass die Rippe die jeweilige Öffnung in Fahrtrichtung zumindest teilweise verdeckt, so dass ein durch die Fahrt erzeugter dynamischer Druck nicht auf die Öffnung einwirkt.Vorzugsweise sind mehrere nach außen ragende Rippen jeweils im Bereich einer Öffnung zum Austritt gefilterter Luft vorgesehen, bevorzugt ist jede der Öffnungen mit einer vorbeschriebenen Rippe versehen.

Das Filtermedium ist vorzugsweise derart ausgebildet, dass es auch bei einer Temperatur von mehr als 600°C stabil ist, um den Temperaturen in unmittelbarer Umgebung einer Scheibenbremse widerstehen zu können. Das Filtermedium kann dabei ein Metall, ein Metallfaservlies, Glas, Keramik und/oder einen hochtemperaturbeständigen Kunststoff, insbesondere Polyetheretherketon, aufweisen. Bevorzugt handelt es sich bei dem Filtermedium um ein gesintertes Metallvlies, das sich zur Ausbildung eines formstabilen Filterelements mit integralen Zungen eignet.

Jedoch auch das Gehäuse soll vorteilhaft über eine hinreichende Temperaturbeständigkeit verfügen; zu diesem Zweck kann es aus einem Metallblech, bevorzugt Stahlblech, ausgebildet sein. Neben der hervorragenden Temperaturbeständigkeit bietet Stahlblech den weiteren Vorteil, dass das Gehäuse durch einen einfachen Umformprozess erhalten werden kann, beispielsweise durch Tiefziehen.

Das ringsegmentförmige Gehäuse deckt vorzugsweise einen großen Winkelbereich der Bremsscheibe ab, um eine hohe Filtrationswirkung zu erzielen. Das Gehäuse erstreckt sich dabei vorzugsweise über einen Ringsegmentwinkel von mehr als 45°, insbesondere von mehr als 75°, besonders bevorzugt von mehr als 90°. Es ist bei der Wahl eines geeigneten Umgriffswinkels ein Zielkonflikt zwischen dem Anteil abzufiltrierender Partikel sowie der der Scheibenbremse zur Verfügung stellbaren Kühlleistung zu lösen.

Zur Erleichterung der Montage des Gehäuses kann das Gehäuse ein erstes und ein zweites Gehäuseteil aufweisen. Die beiden Gehäuseteile sind dabei vorzugsweise zumindest teilweise axial beidseitig der Bremsscheibe anordenbar. Besonders bevorzugt sind das erste Gehäuseteil und das zweite Gehäuseteil reversibel lösbar verbindbar.

Alternativ können die beiden Gehäuseteile auch unlösbar verbunden sein, beispielsweise verschweißt. Vorteilhaft wird gemäß dieser Ausführungsform das Filtermedium bereits vor dem Verbinden der Gehäuseteile eingelegt, so dass zumindest der Vormontageprozess vereinfacht ist, wenn auch nicht der Austausch des Filtermediums im Service. Es ist in diesem Fall jedoch denkbar, im Servicefall den gesamten Bremsstaubfilter (inkl. Gehäuse und Filtermedium) auszutauschen, um diesen beispielsweise einer Aufarbeitung zuzuführen. Alternativ zu einer Verschweißung kann vorgesehen sein, dass das erste Gehäuseteil und das zweite Gehäuseteil miteinander über eine Bördelverbindung verbunden sind.

Zur Verbindung der beiden Gehäuseteile kann eine Schraubverbindung, Clipverbindung, ein Klappmechanismus und/oder ein Schwenkmechanismus vorgesehen sein.

Die Gehäuseumfangswand kann Teil des ersten Gehäuseteils oder des zweiten Gehäuseteils sein, so dass diese mit einer der beiden Gehäuseseitenwände verbunden ist. Die Gehäuseumfangswand kann ferner zumindest teilweise aus sich überlappenden Gehäuseteilen ausgebildet sein.

Ein Gehäuseteil kann relativ zu einem ortsfest verbleibenden weiteren Gehäuseteil verschwenkbar sein. Die Schwenkachse eines solchen Schwenkmechanismus kann sich parallel zu einer die beiden Gehäuseseitenwände verbindenden Achse, insbesondere parallel zur Rotationsachse der Bremsscheibe, erstrecken. In diesem Fall ist besonders bevorzugt das Gehäuseteil, das die Gehäuseumfangswand aufweist, zumindest teilweise relativ zu dem weiteren Gehäuse verschwenkbar. Alternativ oder zusätzlich dazu kann die Schwenkachse in radialer Richtung des Gehäuses bzw. in Bezug zur Bremsscheibe verlaufen, d.h. normal zur Rotationsachse der Bremsscheibe. In diesem Fall ist vorzugsweise eine erste Gehäuseseitenwand relativ zu dem weiteren Gehäuse verschwenkbar.

Die vorbeschriebene Verschwenkbarkeit vereinfacht einen Austausch des Filtermediums im Servicefall deutlich.

Die erfindungsgemäße Aufgabe wird weiterhin gelöst durch eine Scheibenbremsenanordnung mit einer Bremsscheibe, einem Bremssattel und einem zuvor beschriebenen Bremsstaubpartikelfilter.

Der Bremsstaubpartikelfilter kann eine ortsfeste Position relativ zu dem Bremssattel, einem Radlagergehäuse und/oder einem Spritzschutz aufweisen. Alternativ oder zusätzlich dazu kann der Bremsstaubpartikelfilter am Bremssattel, an einem Radlagergehäuse und/oder an einem Spritzschutz befestigt sein, wobei eine Befestigung am Bremssattel vorteilhaft vorgesehen werden kann, wenn es sich um einen sog. Festsattel handelt. Besonders vorteilhaft kann der Bremsstaubpartikelfilter an den selben Befestigungspunkten mit dem Radlagergehäuse verbunden werden, wie auch der Bremssattel. Ferner können die Schrauben, mit denen der Bremssattel mit dem Radlagergehäuse verschraubt ist, zumindest im Bereich eines Schraubenkopfs ein Sacklochgewinde aufweisen, so dass der Bremsstaubpartikelfilter mit den Schrauben verbindbar ist, so dass vorteilhaft nicht die sicherheitskritische Verschraubung des Bremssattel(halters) mit dem Radlagergehäuse beeinflusst wird (Setzen/Vorspannkraftänderung).

In besonders bevorzugter Ausgestaltung der Erfindung kann es sich bei einem Gehäuseteil des Bremsstaubpartikelfilters um ein die Bremsscheibe innenliegend zumindest teilweise bedeckendes Spritzschutzelement, insbesondere Spritzschutzblech, handeln. Hierdurch kann auf ein zusätzliches Spritzschutzblech verzichtet werden, so dass Gewicht eingespart werden kann, was aufgrund einer Anordnung im ungefederten Bereich eines Fahrwerks fahrdynamische Vorteile bietet.

Um eine besonders effektive Partikelabscheidung zu bewirken, ist der Bremsstaubpartikelfilter vorzugsweise unmittelbar an den Bremssattel anschließend angeordnet. Der Bremsstaubpartikelfilter ist dabei vorzugsweise dem Bremssattel nachgelagert angeordnet, wobei sich der Begriff "nachgelagert" auf die Rotationsrichtung der Bremsscheibe bei einer bestimmungsgemäßen Vorwärtsfahrt des Fahrzeuges bezieht, an dem die Scheibenbremsenanordnung vorgesehen ist.

Der Bremsstaubpartikelfilter bedeckt vorzugsweise zumindest teilweise eine Außenseite des Bremssattels, besonders bevorzugt eine Umfangs-Außenseite bzw. radiale Außenseite des Bremssattels. Die Überdeckung des Bremssattels erfolgt dabei vorzugsweise mit dem Gehäuseendbereich. Besonders bevorzugt ist der Bremssattel im Bereich der Umfangs-Außenseite, an der meist Öffnungen zur Kühlluftzufuhr und/oder Service (Entnahme der Reibbeläge) vorliegen, vollständig, zumindest jedoch im Bereich der Öffnungen, von dem Gehäuseendbereich des Bremsstaubpartikelfilters überdeckt, so dass keine ungefilterte Abströmung in diesem Bereich auftritt, sondern von dort austretende, partikelbeladene Luft zunächst durch das Filtermedium und schließlich durch die Öffnung in der Gehäuseumfangswand in die Umgebung strömt.

In weiter bevorzugter Ausgestaltung der Scheibenbremsenanordnung ist die zumindest eine nach innen ragende Zunge mit ihrem freien Ende zum Bremssattel hin ausgerichtet. Vorzugsweise sind mehrere, insbesondere alle, Zungen mit ihren jeweils freien Enden zum Bremssattel hin ausgerichtet. Hierdurch kann die Filtereffektivität weiter erhöht werden, da Bremsstaubpartikel, die von der Rotation tangential mitgenommen werden, quasi durch die Form der Zungen aufgefangen werden können.

Weitere Merkmale und Vorteile der Erfindung ergeben sich aus der nachfolgenden Beschreibung mehrerer Ausführungsbeispiele der Erfindung, aus den Patentansprüchen sowie den Figuren, die erfindungswesentliche Einzelheiten zeigen. Die in den Figuren gezeigten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein und sind demgemäß miteinander kombinierbar.

### Beschreibung der Zeichnungen

In der Zeichnung zeigen:
- Fig. 1: eine Seitenansicht auf eine erfindungsgemäße Scheibenbremsenanordnung mit einer ersten Ausführungsform des Bremsstaubpartikelfilters;
- Fig. 2: eine isometrische Ansicht eines Bremsstaubpartikelfilters gemäß einer weiteren Ausführungsform;
- Fig. 3: eine Querschnittsansicht des Bremsstaubpartikelfilters gemäß Fig. 2.
- Fig. 4: eine isometrische Ansicht eines Bremsstaubpartikelfilters gemäß einer noch weiteren Ausführungsform;
- Fig. 5: eine isometrische Ansicht des Bremsstaubpartikelfilters gemäß Fig. 1;
- Fig. 6: eine isometrische Ansicht eines ersten Gehäuseteils und eines zweiten Gehäuseteils des Gehäuses eines Bremsstaubpartikelfilters in einer zweiten Ausführungsform der Scheibenbremsenanordnung;
- Fig. 7: eine isometrische Ansicht auf die Verbindung eines ersten Gehäuseteils und eines zweiten Gehäuseteils einer vierten Ausführungsform der Scheibenbremsenanordnung durch einen Schwenkmechanismus und/oder einen Klappmechanismus; und
- Fig. 8: eine isometrische Ansicht auf die Verbindung des ersten Gehäuseteils und des zweiten Gehäuseteils durch einen Schwenkmechanismus und/oder einen Klappmechanismus entlang einer weiteren Schwenkachse in einer fünften Ausführungsform der Scheibenbremsenanordnung.

### Ausführungsformen der Erfindung

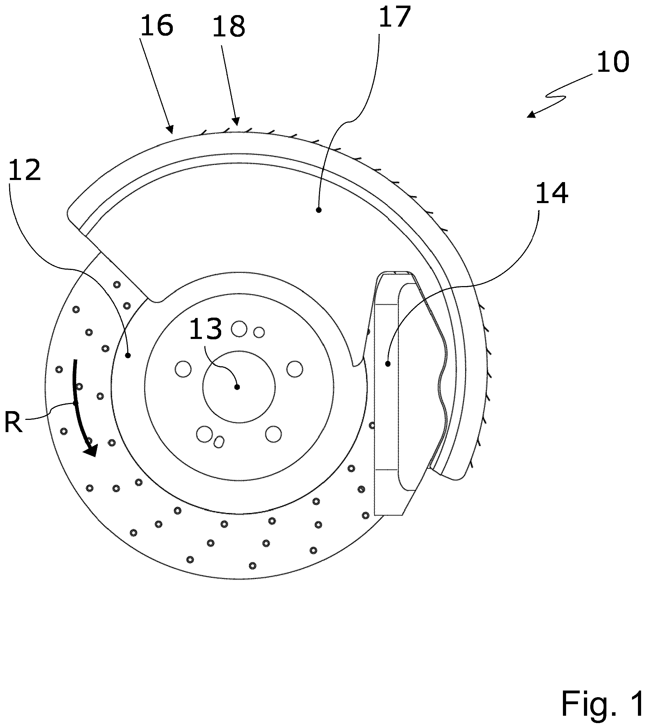

**Fig. 1** zeigt eine Seitenansicht auf eine Scheibenbremsenanordnung **10** mit einer Bremsscheibe **12**, welche eine Rotationsachse bzw. Drehachse **13** aufweist, mit einem Bremssattel **14** und einem Bremsstaubpartikelfilter **16** in einer ersten Ausführungsform. Hierbei ist der Bremsstaubpartikelfilter 16 in seiner Position relativ zu dem Bremssattel 14 ortsfest angeordnet und/oder am Bremssattel 14 befestigt. Die Scheibenbremsenanordnung 10 weist ferner ein Radlagergehäuse auf (nicht gezeigt), an dem der Bremssattel 14 befestigt ist, und der Bremsstaubpartikelfilter 16 kann in seiner Position relativ zu dem Radlagergehäuse ortsfest angeordnet und/oder am Radlagergehäuse befestigt sein. Alternativ oder zusätzlich dazu kann die Scheibenbremsenanordnung 10 einen Spritzschutz (nicht gezeigt) in Form eines Spritzschutzblechs aufweisen und der Bremsstaubpartikelfilter 16 in seiner Position relativ zu dem Spritzschutz ortsfest angeordnet und/oder am Spritzschutz befestigt sein.

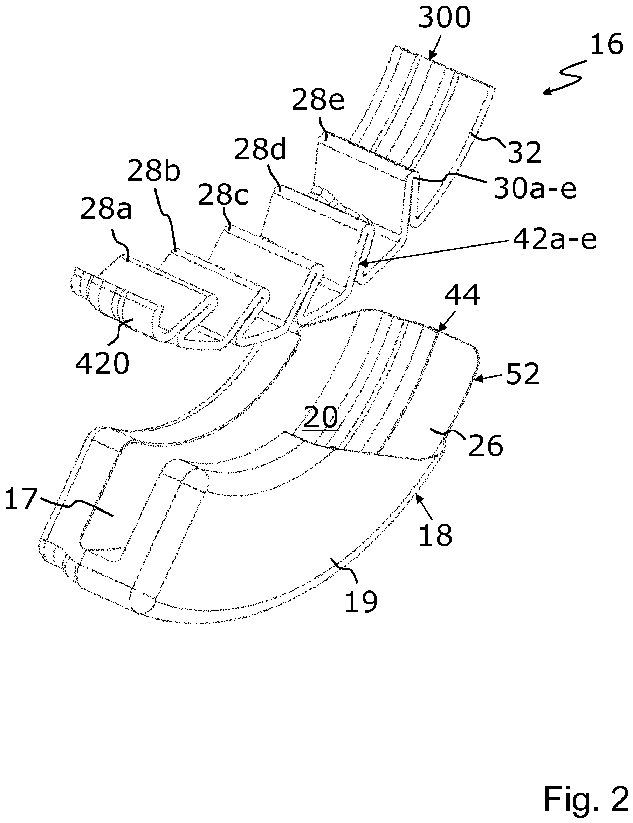

Der Bremstaubpartikelfilter 16 weist eine erste Gehäuseseitenwand **17** auf, welche einen Teil eines ringsegmentförmigen Gehäuses **18** bildet. Zur ersten Gehäuseseitenwand 17 befindet sich entlang der Drehachse 13 der Bremsscheibe 12 axial beabstandet eine zweite Gehäuseseitenwand **19** (siehe Fig. 2), welche ebenfalls einen Teil des ringsegmentförmigen Gehäuses 18 bildet und zwischen denen die Bremsscheibe 12 im Gehäuseinnenraum aufgenommen ist.

Der Bremsstaubpartikelfilter 16 kann insbesondere in Rotationsrichtung R der Bremsscheibe 12 bei Vorwärtsfahrt eines Fahrzeugs, an dem die Scheibenbremsenanordnung 10 angeordnet werden kann, dem Bremssattel 14 nachgelagert angeordnet sein.

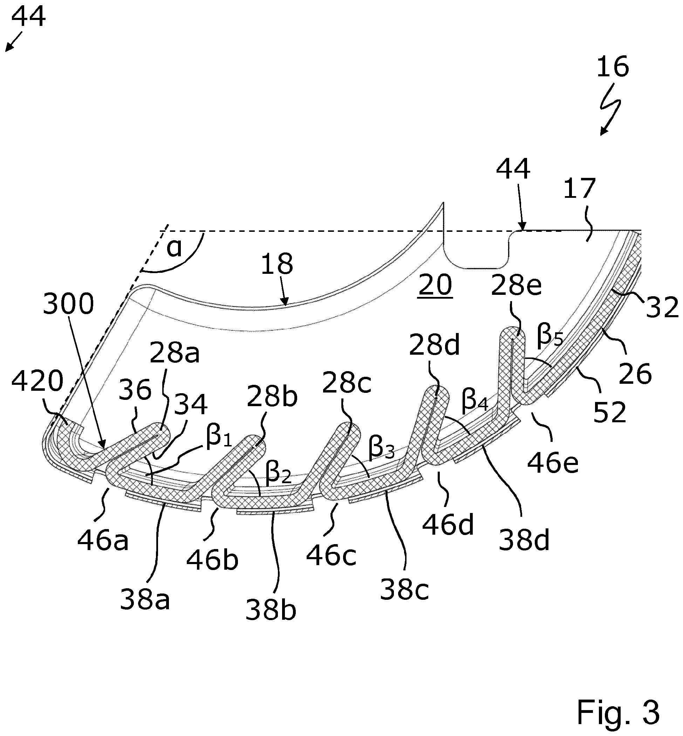

In **Fig. 2** ist ein Querschnitt durch den Bremsstaubpartikelfilter 16 zum Filtern von mit Bremsstaub versehener Luft dargestellt, in **Fig. 3** die dazu gehörige isometrische Ansicht mit teilweise radial ausgerücktem Filterelement 300 gezeigt. Durch das ringsegmentförmige Gehäuse 18 kann der Bremsstaubpartikelfilter 16 die Bremsscheibe 12 (siehe Fig. 1) zumindest teilweise im Gehäuseinnenraum **20** aufnehmen. Das ringsegmentförmige Gehäuse 18 kann sich über einen Ringsegmentwinkel **α** von in diesem Ausführungsbeispiel mehr als 90° erstrecken. Der Bremsstaubpartikelfilter 16 kann bündig an dem Bremssattel 14 (siehe Fig. 1) angeordnet werden, so dass beim Bremsen durch die Bremsscheibe 12 (siehe Fig. 1) bewegte Luft von dem Bremssattel 14 in den Bremsstaubpartikelfilter 16 strömen kann.

Das Gehäuse 18 weist eine sich radial außen in Umfangsrichtung des Bremsstaubpartikelfilters 16 erstreckende Gehäuseumfangswand **26** auf. Die Gehäuseseitenwände 17 (siehe Fig. 1), 19 sind über die Gehäuseumfangswand 26 miteinander verbunden.

Der Bremsstaubpartikelfilter 16 weist ferner Zungen **28a**, **28b**, **28c**, **28d**, **28e** auf. Diese Zungen 28a bis 28e erstrecken sich von der Gehäuseumfangswand 26 des Bremsstaubpartikelfilters 16 und sind aus dem Filtermedium 32 gebildet, was in der Abbildung der Fig. 3 besonders gut zu erkennen ist. Sie ragen im Gehäuseinnenraum 20 des Bremsstaubpartikelfilters 16 von der Gehäuseumfangswand 26 nach innen. Dabei schließen sie mit der Gehäuseumfangswand 26 jeweils einen Winkel **β₁**, **β₂**, **β₃**, **β₄**, **β₅** ein. An diesen Zungen 28a bis 28e kann die Luft, welche in den Bremsstaubpartikelfilter 16 einströmt, in Richtung der Gehäuseumfangswand 26 geführt werden. Die Zungen 28a bis 28e sind mit ihrem jeweiligen freien Ende **30a**, **30b**, **30c**, **30d**, **30e** zum Bremssattel 14 (siehe Fig. 1) hin ausgerichtet.

Das Filtermedium 32 bildet die Zungen 28a bis 28e jeweils durch eine U-förmige bzw. V-förmige Faltung **42a**, **42b**, **42c**, **42d**, **42e** aus, die sich mit zumindest einer Radialkomponente nach innen erstreckt.

Bei dem Filtermedium handelt es sich um einen zusammenhängenden Materialstreifen, der sowohl alle Zungen 28a bis 28e bildet als sich auch über die Innenseite der Gehäuseumfangswand 26 in den Gehäuseendbereich 52 erstreckt.

Die der Gehäuseumfangswand 34 zugewandte Seite ist hier beispielhaft an der Zunge 28a mit **34** und die abgewandte Seite mit **36** bezeichnet. Die effektive Filterfläche ist somit in Umfangsrichtung des Gehäuseinnenraums 20 durch die Zungen 28a bis 28e vergrößert. Das Filtermedium 32 ist ferner an Abschnitten **38a**, **38b**, **38c**, **38d** der Gehäuseumfangswand 26 zwischen den Zungen 28a bis 28e angeordnet. Hierdurch ist das Filtermedium 32 unmittelbar mit der Gehäuseumfangswand 26 verbunden. Insbesondere ist es an der Gehäuseumfangswand 26 befestigt. Alternativ dazu kann es auch über weitere Zwischenschichten mittelbar mit der Wand des Gehäuses 18 verbunden sein, insbesondere mittels einer Filterelement-Stützstruktur, etwa aus einem Metallgitter.

Das Filtermedium 32 mit den durch dieses integral ausgebildeten Zungen 28a bis 28e liegt gemäß dieser Ausführungsform als gefalteter Medienabschnitt vor, der die Faltungen 42a bis 42e aufweist, wobei der gefaltete Medienabschnitt eine ausreichende Eigensteifigkeit aufweist, um als Filterelement 300 gehandhabt zu werden und zu Servicezwecken aus dem Gehäuse 18 des Bremsstaubpartikelfilters 16 entnommen /eingesetzt zu werden. An einem seiner in Umfangsrichtung gesehen axial verlaufenden Endkanten weist das Filterelement 300 einen radial nach innen gebogenen Randbereich 420 auf, der dazu ausgebildet ist, mit einer Filterelementmontagevorrichtung, die auf Seite des Gehäuses vorliegt, in Wirkverbindung zu treten. So kann das Filterelement 300 mit dem gebogenen Randbereich 420 beispielsweise hinter einer Befestigungslasche formschlüssig verklemmt werden.

Bei einer weiteren Ausführungsform weist der Bremsstaubpartikelfilter zusätzlich zu dem Filtermedium 32 ein weiteres Filtermedium auf (nicht gezeigt). Hierbei ist das Filtermedium 32 zwischen der jeweiligen Zunge 28a bis 28e und dem weiteren Filtermedium angeordnet. Das weitere Filtermedium weist eine größere Porosität auf als das erste Filtermedium. Bei einer alternativen Ausführungsform kann der Bremsstaubpartikelfilter 16 zusätzliche Filtermedien mit unterschiedlicher Porosität aufweisen.

Der Bremsstaubpartikelfilter 16 kann derart ausgebildet sein, dass die Filterwirkung auf die durch die Bremsscheibe 12 in Umfangsrichtung bewegte Luft zunimmt. Hierzu kann die Porosität des Filtermediums 32 in Umfangsrichtung des Gehäuses, beginnend in einem zur Anlage am Bremssattel 14 (siehe Fig. 1) vorgesehenen Anlagenbereich **44** des Bremsstaubpartikelfilters 16, abnehmen. Alternativ oder zusätzlich dazu kann die Dicke des Filtermediums 32 in Umfangsrichtung des Gehäuses 18, beginnend in dem zur Anlage am Bremssattel 14 (siehe Fig. 1) vorgesehenen Anlagenbereich 44 des Bremsstaubpartikelfilters 16, zunehmen. Alternativ oder zusätzlich dazu kann eine Zunge 28a bis 28e einen kleineren Winkel β₁, β₂, β₃, β₄, β₅ mit der Gehäuseumfangswand 26 einschließen als eine benachbarte Zunge 28a bis 28e, die sich weiter von dem genannten Anlagebereich 44 entfernt befindet. Alternativ oder zusätzlich dazu kann das freie Ende 30a bis 30e einer Zunge 28a bis 28e weniger weit radial nach innen in den Innenraum 20 des Gehäuses 18 vorstehen als eine benachbarte Zunge 28a bis 28e, die sich von diesem Anlagebereich 44 weiter entfernt befindet. Alternativ oder zusätzlich dazu kann die in den Gehäuseinnenraum 20 ragende Fläche zumindest einer Zunge 28a bis 28e kleiner sein als die in den Gehäuseinnenraum 20 ragende Fläche einer benachbarten Zunge 28a bis 28e, die sich von diesem Anlagebereich 44 weiter entfernt befindet.

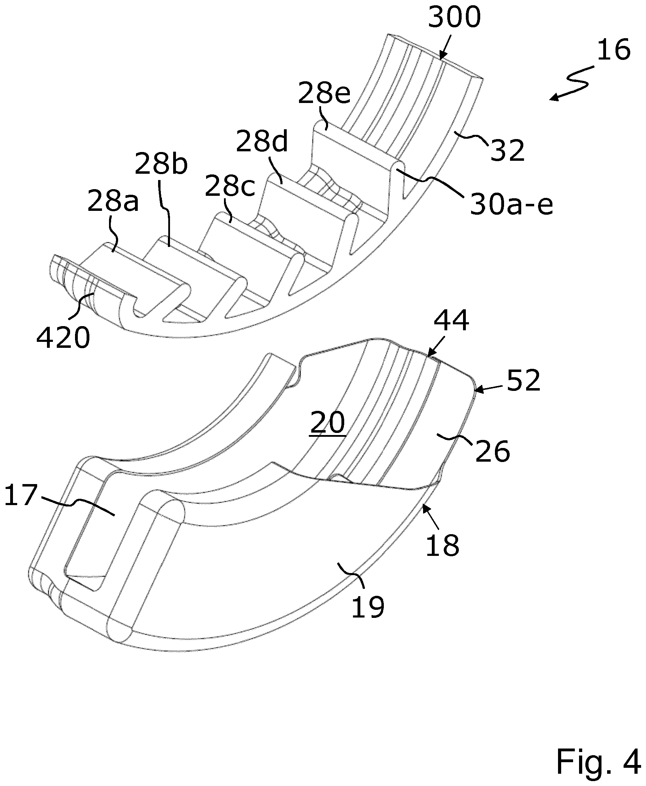

Der Bremsstaubpartikelfilter 16 weist in seiner Gehäuseumfangswand 26 Öffnungen **46a bis 46e** auf (siehe Fig. 3). Durch diese Öffnungen 46a bis 46e kann die gereinigte Luft in den Außenraum entweichen. Die Öffnungen 46a bis 46e werden durch die aus dem Filtermedium 32 gebildeten Zungen 28a bis 28e überdeckt. Hierdurch ist sichergestellt, dass nur gereinigte Luft durch die Öffnungen 46a, 46b in den Außenraum entweichen kann. Der Bremsstaubpartikelfilter 16 weist einen Gehäuseendbereich **52** auf. Der Gehäuseendbereich 52 kann zumindest teilweise die Gehäuseseitenwände 17, 19 und die Gehäuseumfangswand 26 aufweisen. Außerdem weist er das an der Gehäuseumfangswand 26 angeordnete Filtermedium 32 auf. Die Gehäuseumfangswand 26 erstreckt sich bis in den Gehäuseendbereich 52 hinein. Der Gehäuseendbereich 52 kann dazu ausgebildet sein, in Umfangsrichtung des Bremsstaubpartikelfilters 16 von der radialen Außenseite des Bremsstaubpartikelfilters 54 ausgehend den Bremssattel 14, insbesondere einen Spalt **56** des Bremssattels 14 (siehe Fig. 4), zu überdecken. Der Gehäuseendbereich weist zu diesem Zweck eine Aussparung auf, die an die jeweilige Form des Bremssattels anpassbar ist, hier einen Bremssattel mit zumindest zwei Kolben.

Gemäß der in Fig. 4 dargestellten weiteren Ausführungsform des Bremsstaubpartikelfilters 16, die im Wesentlichen der Ausführung der Fig. 2 und 3 entspricht, handelt es sich bei dem Filterelement 300 nicht um ein gefaltetes Filterelement, sondern um einen monolithischen Körper aus Filtermedium 32, der die Zungen 28a bis 28e aufweist, d.h. um ein Formfilterelement. Ein derartiges Formfilterelement 300 ist etwa durch Sintern erhältlich und bietet gegenüber einer gefalteten Bauweise den Vorteil, dass sich tendenziell größere Steifigkeiten erzielen lassen. Es kann sich dabei insbesondere um einen gesinterten Metallschaum oder ein gesintertes Metallvlies handeln. Ansonsten entspricht das Filterelement 300 hinsichtlich seiner Geometrie und Funktion dem Vorbeschriebenen.

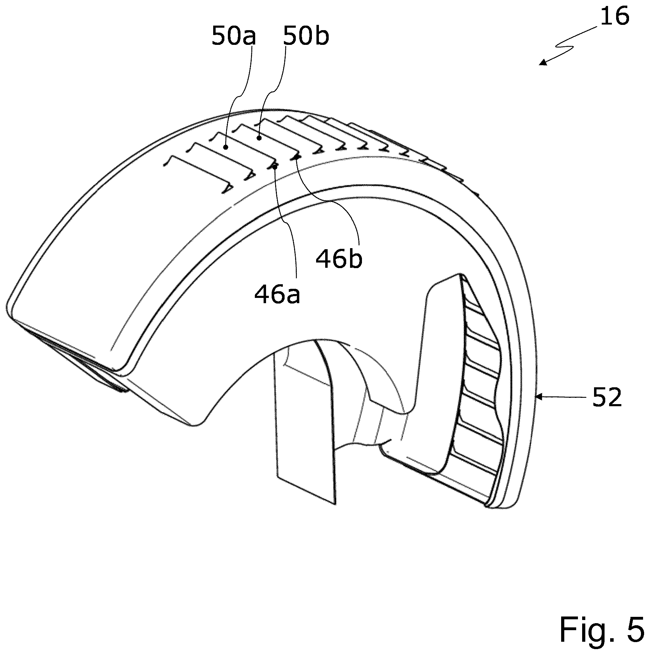

**Fig. 5** zeigt eine isometrische Ansicht des Bremsstaubpartikelfilters 16. Insbesondere sind die nach außen gerichteten Rippen 50a, 50b sowie die Öffnungen 46a, 46b zu sehen. Das Gehäuse 18 kann einstückig, d.h. einteilig, ausgebildet sein.

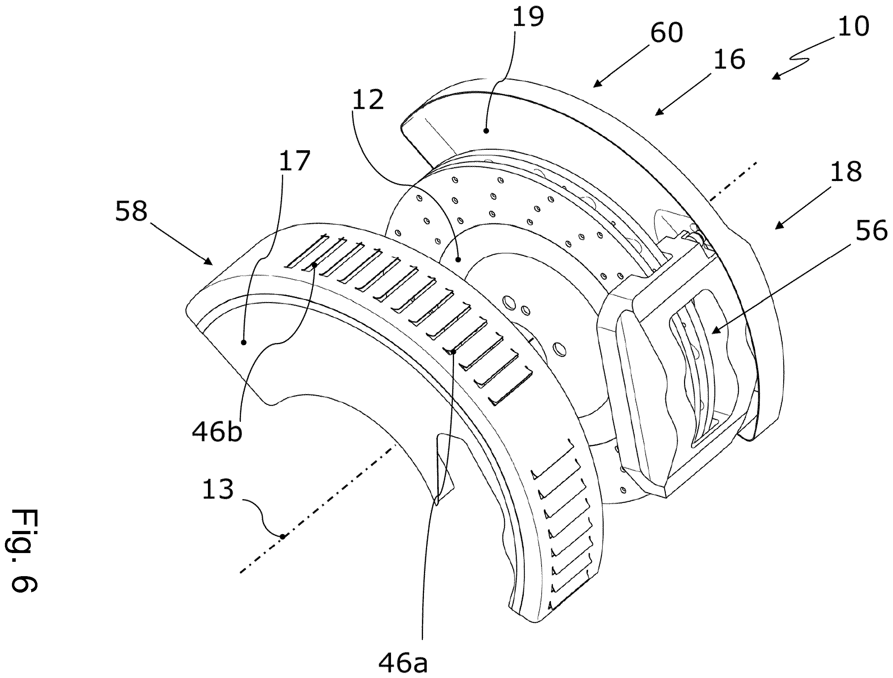

Wie in **Fig. 6** gezeigt, kann das Gehäuse 18 des Bremsstaubpartikelfilters 16 in einer zweiten Ausführungsform der Scheibenbremsenanordnung 10 einen ersten Gehäuseteil **58** und einen zweiten Gehäuseteil **60** aufweisen. Das erste Gehäuseteil 58 weist dabei die erste Gehäuseseitenwand 17 auf. Das zweite Gehäuseteil 60 weist die zweite Gehäuseseitenwand 19 auf, welche zu der ersten Gehäuseseitenwand 17 axial versetzt ist. Somit kann die erste Gehäuseseitenwand 17 entlang der Drehachse 13 der Bremsscheibe 12 axial versetzt zu der Bremsscheibe 12 und die zweite Gehäuseseitenwand 19 auf der zu der ersten Gehäuseseitenwand 17 abgewandten Seite der Bremsscheibe 12 angeordnet werden. Das erste Gehäuseteil 58 weist Öffnungen 46a, 46b auf. Das zweite Gehäuseteil 60, insbesondere die zweite Gehäuseseitenwand 19, kann in Form eines Spritzschutzblechs ausgebildet sein, so dass im Zweifelsfall auf ein separates Spritzschutzblech der Bremsscheibe verzichtet werden kann, was insbesondere für OE-Anwendungen interessant ist.

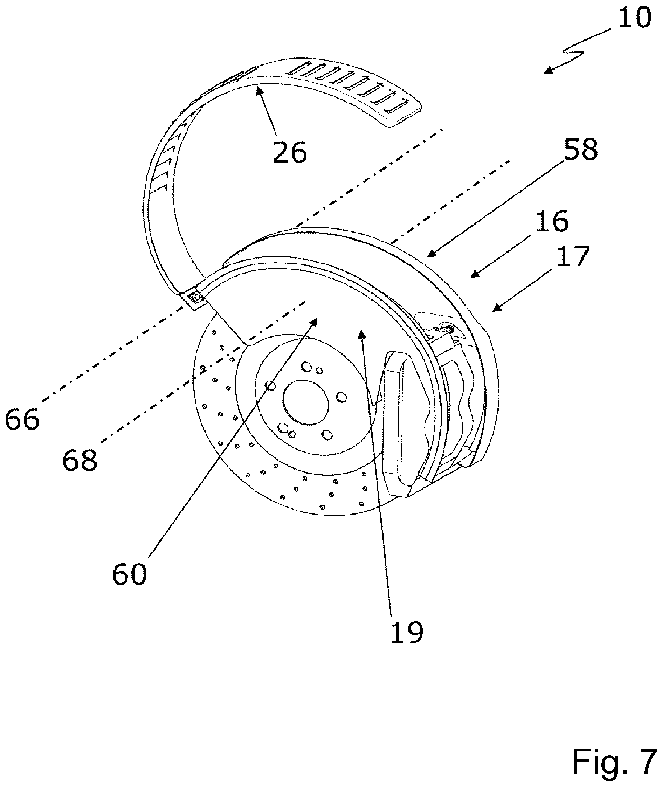

Wie in **Fig. 7** gezeigt, können in einer dritten Ausführungsform der Scheibenbremsenanordnung 10 das erste Gehäuseteil 58 und das zweite Gehäuseteil 60 durch einen Schwenkmechanismus und/oder einen Klappmechanismus miteinander verbindbar und/oder verbunden sein, um den Bremsstaubpartikelfilter 16 schnell öffnen und wieder schließen zu können. Die Schwenkachse **66** des Schwenkmechanismus kann hierbei parallel zu einer Achse **68** angeordnet sein, welche die beiden Gehäuseseitenwände 17, 19 verbindet bzw. durch diese hindurch verläuft, die in diesem Fall zudem parallel zur Rotationsachse der Bremsscheibe verläuft. Dann kann die Gehäuseumfangswand 26 relativ zu den beiden Gehäuseseitenwänden 17, 19 verschwenkt werden.

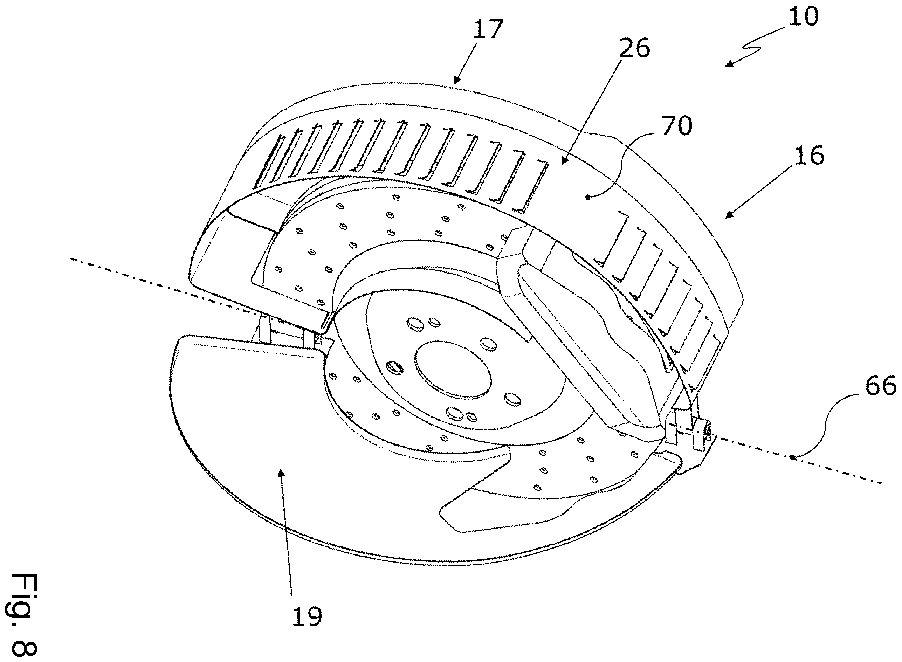

Alternativ oder zusätzlich dazu kann sich in einer vierten Ausführungsform der Scheibenbremsenanordnung 10 die Schwenkachse 66 des Schwenkmechanismus senkrecht zur Außenumfangsseite **70** der Gehäuseumfangswand 26 des Bremsstaubpartikelfilters 16 im montierten Zustand erstrecken, wie in **Fig. 8** gezeigt ist. Dann kann die erste Gehäuseseitenwand 17 relativ zu der zweiten Gehäuseseitenwand 19 und der Gehäuseumfangswand 26 verschwenkt werden.

Unter Vornahme einer Zusammenschau aller Figuren der Zeichnung betrifft die Erfindung zusammenfassend einen Bremsstaubpartikelfilter 16 für eine Scheibenbremsenanordnung 10 mit einer Bremsscheibe 12 und einem Bremssattel 14. Im Gehäuseinnenraum 20 des Gehäuses 18 des Bremsstaubpartikelfilters 16 ist zumindest eine Zunge 28a bis 28e angeordnet oder ausgebildet, wobei zumindest ein Abschnitt dieser Zunge 28a bis 28e radial nach innen ragt. Die Zunge 28a bis 28e ist durch das Filtermedium 32 des Bremsstaubpartikelfilters 16 ausgebildet. Das Gehäuse 18 weist die Form eines Ringsegments auf. Es kann zumindest zur teilweisen Aufnahme der Bremsscheibe 12 im Gehäuseinnenraum 20 verwendet werden. Eine erste Gehäuseseitenwand 17 und eine zweite Gehäuseseitenwand 19 sowie eine Gehäuseumfangswand 26, 62, 64 bilden jeweils Teile des Gehäuses 18. Die Gehäuseseitenwände 17, 19 sind axial voneinander beabstandet. Die Gehäuseumfangswand 26, 62, 64 ist radial außen in Umfangsrichtung des Gehäuses 18 angeordnet. Die Gehäuseumfangswand 26, 62, 64 ist zwischen der ersten Gehäuseseitenwand 17 und der zweiten Gehäuseseitenwand 19 angeordnet oder ausgebildet. Der Bremsstaubpartikelfilter 16 ist zum Auffangen von beim Bremsen entstehenden Partikeln ausgebildet.

## Patentansprüche

1. Bremsstaubpartikelfilter (16) für eine Scheibenbremsenanordnung (10) mit einer Bremsscheibe (12) und einem Bremssattel (14), wobei der Bremsstaubpartikelfilter (16) zum Auffangen von beim Bremsen entstehenden Partikeln ausgebildet ist und wobei der Bremsstaubpartikelfilter (16) Folgendes aufweist:
- Ein ringsegmentförmiges Gehäuse (18) zur zumindest teilweisen Aufnahme der Bremsscheibe (12) in einem Gehäuseinnenraum (20), wobei das Gehäuse (18) zwei axial zueinander beabstandete Gehäuseseitenwände (17, 19) und eine sich radial außen in Umfangsrichtung erstreckende Gehäuseumfangswand (26, 62, 64) aufweist und wobei die Gehäuseumfangswand (26, 62, 64) zwischen den Gehäuseseitenwänden (17, 19) angeordnet oder ausgebildet ist;
- zumindest eine im Gehäuseinnenraum (20) zumindest abschnittsweise mit zumindest einer Radialkomponente von der Gehäuseumfangswand (26, 62, 64) nach innen ragende Zunge (28a, 28b, 28c, 28d, 28e);
**dadurch gekennzeichnet, dass**
- die Zunge (28a, 28b, 28c, 28d) eine flache Querschnittsform aufweist und zumindest eine der Gehäuseumfangswand (26, 62, 64) zugewandte Grundfläche, eine in den Gehäuseinnenraum (20) ragende Stirnfläche sowie zumindest eine Seitenfläche aufweist, und
- zumindest ein Filtermedium (32);
wobei die Zunge (28a, 28b, 28c, 28d, 28e) durch das Filtermedium (32) gebildet ist und wobei die Zunge (28a, 28b, 28c, 28d) keine von dem Filtermedium (32) separaten stützenden Vorrichtungsbestandteile, insbesondere Gehäusebestandteile, aufweist, und das Filtermedium (32) eine ausreichende Steifigkeit bereitstellt, um die Zunge (28a, 28b, 28c, 28d) struktursteif in Form zu halten.

2. Bremsstaubpartikelfilter nach Anspruch 1,
wobei die Zunge (28a, 28b, 28c, 28d) einen im Wesentlichen rechteckförmigen Querschnitt hat, wobei ein Verhältnis einer breiten Seite zu einer schmalen Seite des rechteckförmigen Querschnitts zwischen 15 und 60, bevorzugt zwischen 20 und 40, liegt.

3. Bremsstaubpartikelfilter nach Anspruch 1 oder 2,
- bei dem sich die Zunge (28a, 28b, 28c, 28d, 28e) von einer Gehäusewand (17, 19, 26, 62, 64), insbesondere an der Gehäuseumfangswand (26, 62, 64), erstreckt und/oder
- der ein Filterelement (300) mit dem Filtermedium (32) aufweist, wobei das Filterelement (300) bevorzugt eine Filterelement-Stützstruktur aufweist, an dem das Filtermedium (32) befestigt ist und das Filterelement, insbesondere reversibel austauschbar, im Gehäuse (18) angeordnet ist.

4. Bremsstaubpartikelfilter nach einem der Ansprüche 1 bis 3, wobei zumindest eine weitere Zunge vorgesehen ist, die sich in den Gehäuseinnenraum (20) von zumindest einer Gehäuseseitenwand (17,19) erstreckt, wobei bevorzugt die sich von der Gehäuseumfangswand (26, 62, 64) erstreckende Zunge (28a, 28b, 28c, 28d) und die sich von der Gehäuseseitenwand erstreckende Zunge eine zusammenhängende Zunge bilden, die eine L-förmige oder U-förmige Grundform aufweist.

5. Bremsstaubpartikelfilter nach einem der Ansprüche 1 bis 4, bei dem das Filtermedium (32) eine Faltung (42a, 42b, 42c, 42d, 42e) aufweist, die die Zunge (28a, 28b, 28c, 28d, 28e) bildet, wobei eine Faltenrichtung insbesondere zumindest eine Radialkomponente aufweist.

6. Bremsstaubpartikelfilter nach einem der Ansprüche 1 bis 5, bei dem das Filtermedium (32), das die zumindest eine Zunge (28a, 28b, 28c, 28d, 28e) bildet, in Form eines formsteifen Formfilterelements (300) vorliegt, das eine gebogene Außenkontur hat, die mit einer Innenkontur der Gehäuseumfangswand (26, 62, 64) des Gehäuses (18) korrespondiert.

7. Bremsstaubpartikelfilter nach Anspruch 6, wobei an einer Gehäusewand (17, 19, 26, 62, 64), insbesondere an der Gehäuseumfangswand (26, 62, 64), zumindest ein Teil einer Filterelementmontagevorrichtung vorliegt, insbesondere zumindest ein Teil einer Schnellmontagevorrichtung, insbesondere ein Teil einer Clipsverbindung, Schnellmontagelasche und/oder ein magnetisches Verbindungselement.

8. Bremsstaubpartikelfilter nach Anspruch 6 und 7, wobei das Filterelement (300) zumindest ein mit der Filterelementmontagevorrichtung korrespondierendes Montagegegenelement aufweist, insbesondere einen zumindest abschnittsweise gebogenen, insbesondere nach radial innen gebogenen, axial verlaufenden Randbereich (420), der dazu ausgebildet ist, mit einer Filterelementmontage-vorrichtung in Wirkverbindung zu treten.

9. Bremsstaubpartikelfilter nach einem der vorherigen Ansprüche, bei dem das Filtermedium (32) im Bereich der Zunge (28a, 28b, 28c, 28d, 28e) in Form einer Auffangtasche für Partikel ausgebildet ist, wobei die Auffangtasche im montierten Zustand des Bremsstaubpartikelfilters nach unten hin geschlossen ist, um ein Entweichen der Partikel aufgrund der auf die Partikel wirkenden Schwerkraft zu verhindern.

10. Bremsstaubpartikelfilter nach einem der vorherigen Ansprüche, **dadurch gekennzeichnet, dass** der Bremsstaubpartikelfilter (16) eine Mehrzahl von im Gehäuseinnenraum (20) nach innen ragenden Zungen (28a, 28b, 28c, 28d, 28e) aufweist, die in Umfangsrichtung beabstandet angeordnet sind, wobei die Zungen (28a, 28b, 28c, 28d, 28e) jeweils durch das Filtermedium (32) gebildet sind, wobei vorzugsweise zumindest zwei Zungen (28a, 28b, 28c, 28d, 28e) einen unterschiedlichen Winkel (β₁, β₂, β₃, β₄, β₅) mit der Gehäuseumfangswand (26, 62, 64) einschließen.

11. Bremsstaubpartikelfilter nach einem der vorherigen Ansprüche, bei dem der Bremsstaubpartikelfilter (16) derart ausgebildet ist, dass die Filterwirkung auf die durch die Bremsscheibe (12) in Umfangsrichtung des Gehäuses (18) bewegte Luft zunimmt, indem insbesondere
- die Porosität des Filtermediums (32) in Umfangsrichtung des Gehäuses (18), beginnend in einem zur Anlage am Bremssattel (14) vorgesehenen Anlagebereich (44) des Bremsstaubpartikelfilters (16), abnimmt; insbesondere in Verbindung mit Anspruch 7, das Filtermedium (32) an einer Zunge (28a, 28b, 28c, 28d, 28e) eine größere Porosität aufweist als das Filtermedium (32) an der nächsten benachbarten Zunge (28a, 28b, 28c, 28d, 28e), die sich weiter von einem zur Anlage am Bremssattel (14) vorgesehenen Anlagebereich (44) des Bremsstaubpartikelfilters (16) entfernt befindet;
- die Dicke des Filtermediums (32) in Umfangsrichtung des Gehäuses (18), beginnend in einem zur Anlage am Bremssattel (14) vorgesehenen Anlagebereich (44) des Bremsstaubpartikelfilters (16), zunimmt;
- in Verbindung mit Anspruch 7, zumindest eine Zunge (28a, 28b, 28c, 28d, 28e) zu einem zur Anlage am Bremssattel (14) vorgesehenen Anlagebereich (44) kleineren Winkel (β₁, β₂, β₃, β₄, β₅) mit der Gehäuseumfangswand (26) einschließt als eine benachbarte Zunge (28a, 28b, 28c, 28d, 28e), die sich weiter von dem zur Anlage am Bremssattel (14) vorgesehenen Anlagebereich (44) des Bremsstaubpartikelfilters (16) entfernt befindet;
- in Verbindung mit Anspruch 10, das freie Ende (30a, 30b, 30c, 30d, 30e) zumindest einer Zunge (28a, 28b, 28c, 28d, 28e) weniger weit radial nach innen in den Innenraum des Gehäuses vorsteht als eine benachbarte Zunge (28a, 28b, 28c, 28d, 28e), die sich insbesondere weiter von einem zur Anlage am Brems-sattel (14) vorgesehenen Anlagebereich (44) des Bremsstaubpartikelfilters (16) entfernt befindet; und/oder
- in Verbindung mit Anspruch 10, die in den Gehäuseinnenraum (20) ragende Fläche zumindest einer Zunge (28a, 28b, 28c, 28d, 28e) kleiner ist als die in den Gehäuseinnenraum (20) ragende Fläche einer benachbarten Zunge (28a, 28b, 28c, 28d, 28e), die sich insbesondere weiter von einem zur Anlage am Brems-sattel (14) vorgesehenen Anlagebereich (44) des Bremsstaubpartikelfilters (16) entfernt befindet.

12. Bremsstaubpartikelfilter nach einem der vorherigen Ansprüche, bei dem der Bremsstaubpartikelfilter (16) zumindest eine Öffnung (46a - 46e) zum Austritt gefilterter Luft in der Gehäusewand (17, 19, 26), insbesondere in der Gehäuseumfangswand (26, 62, 64), aufweist, wobei der Bremsstaubpartikelfilter (16) vorzugsweise eine Mehrzahl an Öffnungen (46a - 46e) zum Austritt gefilterter Luft in der Gehäusewand (17, 19, 26), insbesondere in der Gehäuseumfangswand (26, 62, 64), aufweist.

13. Bremsstaubpartikelfilter nach Anspruch 12, bei dem der Bremsstaubpartikelfilter (16) einen in Umfangsrichtung des Gehäuses (18) betrachteten Gehäuseendbereich (52) zum zumindest teilweisen Bedecken des Bremssattels (14) an einem Außenumfang aufweist, wobei in dem Gehäuseendbereich (52) zumindest eine Öffnung (46a - 46e) zum Austritt gefilterter Luft vorgesehen ist, insbesondere mehrere Öffnungen (46a - 46e) zum Austritt gefilterter Luft.

14. Bremsstaubpartikelfilter nach einem der vorherigen Ansprüche, bei dem an der Gehäusewand (17, 19, 26), insbesondere an der Gehäuseumfangswand (26), zumindest eine nach außen ragende Rippe (50a, 50b) angeordnet oder ausgebildet ist, vorzugsweise eine Mehrzahl von nach außen ragenden Rippen (50a, 50b) an der Gehäusewand (17, 19, 26), insbesondere der Gehäuseumfangswand (26), angeordnet oder ausgebildet sind, wobei die Rippe (50a,50b) oder die Rippen (50a, 50b) bevorzugt jeweils benachbart zu einer Öffnung angeordnet sind und diese gegenüber einer vorbestimmten Anströmrichtung zumindest teilweise abdecken.

15. Scheibenbremsenanordnung (10), mit einer Bremsscheibe (12), einem Bremssattel (14) und einem Bremsstaubpartikelfilter (16) nach einem der Ansprüche 1 bis 14.

## Claims

1. Brake dust particle filter (16) for a disk brake arrangement (10) having a brake disk (12) and a brake caliper (14), wherein the brake dust particle filter (16) is configured to capture particles generated during braking, and wherein the brake dust particle filter (16) comprises the following:
- A ring segment-shaped housing (18) for at least partially receiving the brake disk (12) in a housing interior space (20), wherein the housing (18) features two housing side walls (17, 19) axially spaced apart from each other and a housing peripheral wall (26, 62, 64) extending radially outwardly in circumferential direction, and wherein the housing peripheral wall (26, 62, 64) is disposed or formed between the housing side walls (17, 19);
- at least one tongue (28a, 28b, 28c, 28d, 28e) projecting inwardly in the housing interior space (20) from the housing peripheral wall (26, 62, 64) at least in sections with at least one radial component;
**characterized in that**
- the tongue (28a, 28b, 28c, 28d) features a flat cross-sectional shape and at least one base surface facing the housing peripheral wall (26, 62, 64), a front face projecting into the housing interior space (20), and at least one side face, and
- at least one filter media (32);
wherein the tongue (28a, 28b, 28c, 28d, 28e) is formed by the filter media (32) and wherein the tongue (28a, 28b, 28c, 28d) does not feature any supporting apparatus components, in particular housing components, separate from the filter media (32) and the filter media (32) provides a sufficient rigidity to keep the tongue (28a, 28b, 28c, 28d) structurally rigid in shape.

2. Brake dust particle filter according to claim 1,
wherein the tongue (28a, 28b, 28c, 28d) has a substantially rectangular cross-section, wherein a proportion of a wide side with respect to a narrow side of the rectangular cross-section is between 15 and 60, preferably between 20 and 40.

3. Brake dust particle filter according to claim 1 or 2,
- in which the tongue (28a, 28b, 28c, 28d, 28e) extends from a housing wall (17, 19, 26, 62, 64), in particular along the housing peripheral wall (26, 62, 64) and/or
- which features a filter element (300) with the filter media (32), wherein the filter element (300) preferably features a filter element support structure on which the filter media (32) is attached and the filter element is disposed, in particular reversibly replaceably, in the housing (18).

4. Brake dust particle filter according to one of the claims 1 to 3, wherein at least one further tongue is provided which extends into the housing interior space (20) from at least one housing side wall (17, 19), wherein preferably the tongue (28a, 28b, 28c, 28d) extending from the housing peripheral wall (26, 62, 64) and the tongue extending from the housing side wall form a continuous tongue which has an L-shaped or U-shaped basic form.

5. Brake dust particle filter according to one of the claims 1 to 4, in which the filter media (32) features a folding (42a, 42b, 42c, 42d, 42e) forming the tongue (28a, 28b, 28c, 28d, 28e), wherein a folding direction features in particular at least one radial component.

6. Brake dust particle filter according to one of the claims 1 to 5, in which the filter media (32), which forms the at least one tongue (28a, 28b, 28c, 28d, 28e), is provided as a dimensionally stable shaped filter element (300) having a curved outer contour, which corresponds with an inner contour of the housing peripheral wall (26, 62, 64) of the housing (18).

7. Brake dust particle filter according to claim 6, wherein at least one part of a filter element mounting device, in particular at least one part of a quick mounting device, in particular one part of a clip connection, quick mounting tongue and/or a magnetic connecting element, is provided on a housing wall (17, 19, 26, 62, 64), in particular on the housing peripheral wall (26, 62, 64).

8. Brake dust particle filter according to claim 6 and 7, wherein the filter element (300) features at least one mounting counter element corresponding with the filter element mounting device, in particular an at least sectionwise curved, in particular radially inwardly curved, axially extending peripheral area (420) designed to establish an operative connection with a filter element mounting device.

9. Brake dust particle filter according to one of the preceding claims, in which the filter media (32) is designed in the area of the tongue (28a, 28b, 28c, 28d, 28e) in the shape of a collecting pocket for particles, wherein the collecting pocket is closed at the bottom in the assembled state of the brake dust particle filter in order to prevent the particles from escaping due to the force of gravity acting on the particles.

10. Brake dust particle filter according to one of the preceding claims, **characterized in that** the brake dust particle filter (16) features a plurality of tongues (28a, 28b, 28c, 28d, 28e) projecting inwardly in the housing interior space (20) and which are disposed spaced apart in the circumferential direction, wherein the tongues (28a, 28b, 28c, 28d, 28e) are each formed by the filter media (32), wherein preferably at least two tongues (28a, 28b, 28c, 28d, 28e) enclose a different angle (β₁, β₂, β₃, β₄, β₅) with the housing peripheral wall (26, 62, 64).

11. Brake dust particle filter according to one of the preceding claims, in which the brake dust particle filter (16) is designed in such a way that the filtering effect on the air flowing through the brake disk (12) in the circumferential direction of the housing (18) increases, in particular as
- the porosity of the filter media (32) decreases in the circumferential direction of the housing (18), beginning in an abutment area (44) of the brake dust particle filter (16) intended for abutment against the brake caliper (14); in particular in combination with claim 7, the filter media (32) features at a tongue (28a, 28b, 28c, 28d, 28e) a greater porosity than the filter media (32) at the next adjacent tongue (28a, 28b, 28c, 28d, 28e) which is located further away from an abutment area (44) of the brake dust particle filter (16) intended for abutment against the brake caliper (14);
- the thickness of the filter media (32) increases in the circumferential direction of the housing (18), starting in an abutment area (44) of the brake dust particle filter (16) intended for abutment against the brake caliper (14);
- in combination with claim 7, at least one tongue (28a, 28b, 28c, 28d, 28e) encloses a smaller angle (β₁, β₂, β₃, β₄, β₅) with the housing peripheral wall (26) to an abutment area (44) intended for abutment against the brake caliper (14) than an adjacent tongue (28a, 28b, 28c, 28d, 28e) which is located further away from the abutment area (44) of the brake dust particle filter (16) intended for abutment against the brake caliper (14);
- in combination with claim 10, the free end (30a, 30b, 30c, 30d, 30e) of at least one tongue (28a, 28b, 28c, 28d, 28e) projects radially inwardly into the interior space of the housing less than an adjacent tongue (28a, 28b, 28c, 28d, 28e) located in particular further away from an abutment area (44) of the brake dust particulate filter (16) intended for abutment against the brake caliper (14); and/or
- in combination with claim 10, the area of at least one tongue (28a, 28b, 28c, 28d, 28e) projecting into the housing interior space (20) is smaller than the area of an adjacent tongue (28a, 28b, 28c, 28d, 28e) projecting into the housing interior space (20), which tongue is located in particular further away from an abutment area (44) of the brake dust particle filter (16) intended for abutment against the brake caliper (14).

12. Brake dust particle filter according to one of the preceding claims, in which the brake dust particle filter (16) features at least one opening (46a - 46e) for the exit of filtered air in the housing wall (17, 19, 26), in particular in the housing peripheral wall (26, 62, 64), wherein the brake dust particle filter (16) preferably features a plurality of openings (46a - 46e) for the exit of filtered air in the housing wall (17, 19, 26), in particular in the housing peripheral wall (26, 62, 64).

13. Brake dust particle filter according to claim 12, in which the brake dust particle filter (16) features a housing end area (52) as seen in the circumferential direction of the housing (18) for at least partially covering the brake caliper (14) on an outer periphery, wherein at least one opening (46a - 46e) is provided in the housing end area (52) for the exit of filtered air, in particular a plurality of openings (46a - 46e) for the exit of filtered air.

14. Brake dust particle filter according to one of the preceding claims, in which at least one outwardly projecting rib (50a, 50b) is disposed or formed on the housing wall (17, 19, 26), in particular on the housing peripheral wall (26), preferably a plurality of outwardly projecting ribs (50a, 50b) are disposed or formed on the housing wall (17, 19, 26), in particular on the housing peripheral wall (26), wherein the rib (50a, 50b) or the ribs (50a, 50b) are preferably each disposed adjacent to an opening and at least partially cover it with respect to a predetermined inflow direction.

15. Disk brake arrangement (10), with a brake disk (12), a brake caliper (14), and a brake dust particle filter (16) according to one of the claims 1 to 14.

## Revendications

1. Filtre à particules de poussière de frein (16) pour un ensemble de frein à disque (10) ayant un disque de frein (12) et un étrier de frein (14), dans lequel le filtre à particules de poussière de frein (16) est conçu pour collecter des particules occasionnées lors du freinage et dans lequel le filtre à particules de poussière de frein (16) présente ce qui suit :
- Un boîtier en forme de segment annulaire (18) pour loger au moins partiellement le disque de frein (12) dans un espace intérieur du boîtier (20), dans lequel le boîtier (18) présente deux parois latérales du boîtier (17, 19) espacées axialement l'un de l'autre et une paroi périphérique du boîtier (26, 62, 64) s'étendant radialement vers l'extérieur en direction circonférentielle et dans lequel la paroi périphérique du boîtier (26, 62, 64) est disposée ou conçue entre les parois latérales du boîtier (17, 19) ;
- au moins une languette (28a, 28b, 28c, 28d, 28e) faisant saillie vers l'intérieur dans l'intérieur du boîtier (20) depuis la paroi périphérique du boîtier (26, 62, 64) au moins dans certaines sections avec au moins une composante radiale ;
**caractérisé en ce que**
- la languette (28a, 28b, 28c, 28d) présente une forme plate en coupe transversale et présente au moins une surface de base faisant face à la paroi périphérique du boîtier (26, 62, 64), une face frontale faisant saillie dans l'intérieur du boîtier (20), et au moins une surface latérale, et
- au moins un milieu filtrant (32) ;
dans lequel la languette (28a, 28b, 28c, 28d, 28e) est réalisée par le milieu filtrant (32) et dans lequel la languette (28a, 28b, 28c, 28d) ne présente pas de composants de dispositif de soutien, notamment des composants de boîtier, séparés du milieu filtrant (32), et le milieu filtrant (32) prévoit une rigidité suffisante pour maintenir la languette (28a, 28b, 28c, 28d) en forme de manière structurellement rigide.

2. Filtre à particules de poussière de frein selon la revendication 1,
dans lequel la languette (28a, 28b, 28c, 28d) a une section transversale sensiblement rectangulaire, dans lequel un rapport d'un côté large par rapport à un côté étroit de la section transversale rectangulaire est compris entre 15 et 60, de préférence entre 20 et 40.

3. Filtre à particules de poussière de frein selon la revendication 1 ou 2,
- où la languette (28a, 28b, 28c, 28d, 28e) s'étend depuis une paroi de boîtier (17, 19, 26, 62, 64), notamment le long de la paroi périphérique du boîtier (26, 62, 64) et/ou
- qui présente un élément filtrant (300) avec le milieu filtrant (32), dans lequel l'élément filtrant (300) présente de préférence une structure de support d'élément filtrant à laquelle est attaché le milieu filtrant (32) et l'élément filtrant est disposé, notamment réversiblement échangeable, dans le boîtier (18).

4. Filtre à particules de poussière de frein selon l'une quelconque des revendications 1 à 3, dans lequel au moins une autre languette est prévue qui s'étend dans l'intérieur du boîtier (20) à partir d'au moins une paroi latérale du boîtier (17, 19), dans lequel de préférence la languette (28a, 28b, 28c, 28d) s'étendant à partir de la paroi périphérique du boîtier (26, 62, 64) et la languette s'étendant à partir de la paroi latérale du boîtier forment une languette continue qui a une forme de base en forme de L ou de U.

5. Filtre à particules de poussière de frein selon l'une quelconque des revendications 1 à 4, où le milieu filtrant (32) présente un pliage (42a, 42b, 42c, 42d, 42e) formant la languette (28a, 28b, 28c, 28d, 28e), dans lequel une direction de pliage présente notamment au moins une composante radiale.

6. Filtre à particules de poussière de frein selon l'une quelconque des revendications 1 à 5, où le milieu filtrant (32), qui forme la languette (28a, 28b, 28c, 28d, 28e), au moins au nombre d'une, est réalisé sous forme d'un élément filtrant profilé indéformable (300) ayant un contour extérieur courbe correspondant avec un contour intérieur de la paroi périphérique du boîtier (26, 62, 64) du boîtier (18).

7. Filtre à particules de poussière de frein selon la revendication 6, dans lequel au moins une partie d'un dispositif de montage d'élément filtrant, notamment au moins une partie d'un dispositif de montage rapide, notamment une partie d'une liaison clipsée, d'une languette de montage rapide et/ou d'un élément de raccordement magnétique, est disposée sur une paroi de boîtier (17, 19, 26, 62, 64), notamment sur la paroi périphérique du boîtier (26, 62, 64).

8. Filtre à particules de poussière de frein selon la revendication 6 et 7, dans lequel l'élément filtrant (300) présente au moins un contre-élément de montage correspondant avec le dispositif de montage d'élément filtrant, notamment une zone périphérique (420) s'étendant axialement et courbée au moins dans certaines sections, notamment courbée en sens radial vers l'intérieur, et conçue pour entrer en liaison fonctionnelle avec un dispositif de montage d'élément filtrant.

9. Filtre à particules de poussière de frein selon l'une quelconque des revendications précédentes, où le milieu filtrant (32) est réalisé, dans la zone de la languette (28a, 28b, 28c, 28d, 28e), sous la forme d'une pochette de collecte pour les particules, dans lequel la pochette de collecte est fermée vers le bas à l'état monté du filtre à particules de poussière de frein afin d'empêcher les particules de s'échapper en raison de la force de gravité agissant sur les particules.

10. Filtre à particules de poussière de frein selon l'une quelconque des revendications précédentes, **caractérisé en ce que** le filtre à particules de poussière de frein (16) présente une pluralité de languettes (28a, 28b, 28c, 28d, 28e) qui font saillie vers l'espace intérieur du boîtier (20) et qui sont disposées à distance les unes des autres en direction circonférentielle, dans lequel les languettes (28a, 28b, 28c, 28d, 28e) sont réalisées respectivement par le milieu filtrant (32), dans lequel de préférence au moins deux languettes (28a, 28b, 28c, 28d, 28e) enferment un angle différent (β₁, β₂, β₃, β₄, β₅) avec la paroi périphérique du boîtier (26, 62, 64).

11. Filtre à particules de poussière de frein selon l'une quelconque des revendications précédentes, où le filtre à particules de poussière de frein (16) est réalisé de telle sorte que l'effet filtrant sur l'air se déplaçant à travers le disque de frein (12) en direction circonférentielle du boîtier (18) augmente, en permettant notamment
- que la porosité du milieu filtrant (32) diminue en direction circonférentielle du boîtier (18), en commençant dans une zone d'appui (44) du filtre à particules de poussière de frein (16) destinée à venir en butée contre l'étrier de frein (14) ; notamment en combinaison avec la revendication 7, que le milieu filtrant (32) au niveau d'une languette (28a, 28b, 28c, 28d, 28e) présente une porosité plus grande que le milieu filtrant (32) au niveau de la languette adjacente suivante (28a, 28b, 28c, 28d, 28e) qui est située plus loin d'une zone d'appui (44) du filtre de particules de poussière de frein (16) destinée à venir en butée contre l'étrier de frein (14) ;
- que l'épaisseur du milieu filtrant (32) augmente en direction circonférentielle du boîtier (18), en commençant dans une zone d'appui (44) du filtre à particules de poussière de frein (16) destinée à venir en butée contre l'étrier de frein (14) ;
- en combinaison avec la revendication 7, qu'au moins une languette (28a, 28b, 28c, 28d, 28e) forme un angle plus petit (β₁, β₂, β₃, β₄, β₅) avec la paroi périphérique du boîtier (26) vers une zone d'appui (44) destinée à venir en butée contre l'étrier de frein (14) qu'une languette adjacente (28a, 28b, 28c, 28d, 28e) qui est située plus loin de la zone d'appui (44) du filtre à particules de poussière de frein (16) destinée à venir en butée contre l'étrier de frein (14) ;
- en combinaison avec la revendication 10, que l'extrémité libre (30a, 30b, 30c, 30d, 30e) d'au moins une languette (28a, 28b, 28c, 28d, 28e) fait saillie radialement vers l'espace intérieur du boîtier moins qu'une languette adjacente (28a, 28b, 28c, 28d, 28e) située notamment plus loin d'une zone d'appui (44) du filtre à particules de poussière de frein (16) destinée à venir en butée contre l'étrier de frein (14) ; et/ou
- en combinaison avec la revendication 10, que la zone d'au moins une languette (28a, 28b, 28c, 28d, 28e) faisant saillie dans l'espace intérieur du boîtier (20) est plus petite que la zone d'une languette adjacente (28a, 28b, 28c, 28d, 28e) faisant saillie dans l'espace intérieur du boîtier (20), laquelle languette est située plus loin d'une zone d'appui (44) du filtre à particules de poussière de frein (16) destinée à venir en butée contre l'étrier de frein (14).

12. Filtre à particules de poussière de frein selon l'une des revendications précédentes, où le filtre à particules de poussière de frein (16) présente au moins une ouverture (46a - 46e) pour la sortie de l'air filtré dans la paroi du boîtier (17, 19, 26), notamment dans la paroi périphérique du boîtier (26, 62, 64), dans lequel le filtre à particules de poussière de frein (16) présente de préférence une pluralité d'ouvertures (46a - 46e) pour la sortie de l'air filtré dans la paroi du boîtier (17, 19, 26), notamment dans la paroi périphérique du boîtier (26, 62, 64).

13. Filtre à particules de poussière de frein selon la revendication 12, où le filtre à particules de poussière de frein (16) présente une zone d'extrémité du boîtier (52) considérée en direction circonférentielle du boîtier (18) pour recouvrir au moins partiellement l'étrier de frein (14) sur une circonférence extérieure, dans lequel au moins une ouverture (46a - 46e) est prévue dans la zone d'extrémité du boîtier (52) pour la sortie de l'air filtré, notamment une pluralité d'ouvertures (46a - 46e) pour la sortie de l'air filtré.

14. Filtre à particules de poussière de frein selon l'une quelconque des revendications précédentes, où au moins une nervure (50a, 50b) faisant saillie vers l'extérieur est disposée ou réalisée sur la paroi de boîtier (17, 19, 26), notamment sur la paroi périphérique du boîtier (26), de préférence une pluralité de nervures (50a, 50b) faisant saillie vers l'extérieur sont disposées ou réalisées sur la paroi de boîtier (17, 19, 26), notamment sur la paroi périphérique du boîtier (26), dans lequel la nervure (50a, 50b) ou les nervures (50a, 50b) sont de préférence chacune disposées à proximité d'une ouverture et la recouvrent au moins partiellement par rapport à une direction d'afflux prédéterminée.

15. Ensemble de frein à disque (10), avec un disque de frein (12), un étrier de frein (14) et un filtre à particules de poussière de frein (16) selon l'une quelconque des revendications 1 à 14.
